(19) Europäisches Patentamt
European Patent Office
Office européen des brevets

(11) EP 2 587 769 B1

(12) EUROPEAN PATENT SPECIFICATION

(45) Date of publication and mention of the grant of the patent:
**11.10.2017 Bulletin 2017/41**

(51) Int Cl.:
*H04L 29/08* *(2006.01)*   *H04L 29/06* *(2006.01)*

(21) Application number: **12189498.4**

(22) Date of filing: **23.10.2012**

(54) **Apparatus and method for transmitting a plurality of files**

Vorrichtung und Verfahren zur Übertragung einer Mehrzahl von Dateien

Appareil et procédé pour la transmission d'une pluralité de fichiers

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2011 KR 20110110999**

(43) Date of publication of application:
**01.05.2013 Bulletin 2013/18**

(73) Proprietor: **Samsung SDS Co. Ltd.**
**Seoul 135-082 (KR)**

(72) Inventors:
• **Song, Sunghak**
 **Gyeonggi-do (KR)**
• **Lee, Chang Hoon**
 **Gyeonggi-do (KR)**
• **Woo, Kyungeun**
 **gyeonggi-do (KR)**

• **Oh, Kyu Sam**
 **Seoul (KR)**
• **Hwang, Jin Bum**
 **Seoul (KR)**

(74) Representative: **Grünecker Patent- und Rechtsanwälte**
**PartG mbB**
**Leopoldstraße 4**
**80802 München (DE)**

(56) References cited:
 **EP-A2- 0 862 304   WO-A1-2004/088501**
 **US-A- 6 085 251**

Remarks:
The file contains technical information submitted after the application was filed and not included in this specification

EP 2 587 769 B1

**Description**

1. Field

Apparatuses and methods consistent with the exemplary embodiments relate to an apparatus and a method for transmitting data, and more particularly, to an apparatus and a method for transmitting data, which can transmit files in a package and transmit files to resume download.

2. Description of the Related Art

In the case of a related-art method for transmitting a plurality of files, after a control message regarding one file to be transmitted is transmitted and a control message indicating that the one file has been transmitted is received, next files are transmitted in sequence. Such a transmission method is applied to not only the case in which a single transport control protocol (TCP) channel is established between a server and a client and data is transmitted or received through the channel, but also the case in which a plurality of TCP streams are opened and data is transmitted in parallel.

However, if files are transmitted in the related-art method, real data is not allowed to be transmitted when the control message is transmitted and thus much packet loss occurs or transmission efficiency is sharply reduced in a network of a long round trip time (RTT). Also, if a single file of a size smaller than a network bandwidth delay product (BDP) is transmitted, the network is not efficiently used and thus the file is not efficiently transmitted. As a solution to these problems, a plurality of files are compressed and packed so that a single file can be transmitted. However, in this case, there is a problem in that it takes much time to compress and decompress files. As a result, the time reduced by reducing a size of data through compression is offset by the long time required to compress the data, so that it takes longer time to transmit the data.

Also, if the parallel TCP stream transmission method is used, reversion of transmission, which does not occur in single TCP stream transmission, occurs. That is, the single TCP stream transmission guarantees that data transmitted first necessarily arrives first, whereas the parallel TCP stream transmission does not guarantee that data transmitted through a first stream earlier than data transmitted through a second stream arrives earlier than the data of the second stream.

Also, since the related-art parallel TCP stream transmission does not guarantee sequential transmission of data as described above, it is difficult to resume download of a file. Also, if many files are transmitted in the parallel TCP stream transmission method, it is impossible to resume download or already transmitted data may be transmitted again. Thus, transmission efficiency deteriorates.

US 6 085 251 A relates to the implementation of a parallel file transfer protocol. Data to be transmitted is segmented into separate packets that are transmitted in simultaneous FTP sessions and the separated packets are recombined at the receiving computer. The method comprises: creating a log for a file; segmenting data from the file into a plurality of packets; identifying each of the plurality of packets; recording in the log information to identify each of the plurality of packets and its order in the file, server identification and methods of segmenting; invoking a simultaneous file transfer algorithm at a remote receiving location; transmitting the log to the remote receiving location; analyzing the log at the remote receiving location to identify each of the packets and its order in the file; transmitting the packets substantially simultaneously to the remote receiving location; and recombining the packets into the file. WO 2004/088501 A1 discloses a method for transmitting a media file through a network. It is the object of the present invention to provide an improved data transmitting apparatus for transmitting a file block, as well as a corresponding receiving method.

This object is solved by the subject matter of the independent claims.

Preferred embodiments are defined by the dependent claims.

Further aspects provide an apparatus and a method for transmitting data, which can minimize a number of times that a control message is transmitted when each file is transmitted, by transmitting a plurality of files in a package on a real time basis, and can improve TCP efficiency.

Further aspects also provide an apparatus and a method for transmitting data, which can guarantee a function of resuming download even if some data is omitted when a plurality of files are transmitted in a package or if transmission is interrupted.

According to an aspect of an exemplary embodiment, there is provided a data transmitting apparatus which transmits a plurality of files, including: a disk reader which divides a file block into one or a plurality of microblocks, reads out data corresponding to a size of each of the one or the plurality of microblocks from the plurality of files, and records the data on the plurality of microblocks in sequence; and a communication unit which, if the data is recorded on the one or the plurality of microblocks included in the file block, transmits the file block to a data receiving apparatus.

According to an aspect of another exemplary embodiment, there is provided a data receiving apparatus including: a communication unit which receives a plurality of files blocks, which is a data transmission unit, from a data transmitting apparatus, and a disk writer which, if each of the plurality of file blocks includes one or a plurality of microblocks, which are an unit for recording data of at least one file, reads out data on a microblock basis and records the data on a storage medium.

According to an aspect of still another exemplary embodiment, there is provided a method for transmitting data, which transmits a plurality of files, the method including: dividing a file block into one or a plurality of microblocks, reading out data corresponding to a size of each of the one or the plurality of microblocks from the plurality of files, and recording the data on the plurality of microblocks in sequence; and if the data is recorded on the plurality of microblocks included in the file block, transmitting the file block to a data receiving apparatus.

According to an aspect of still another exemplary embodiment, there is provided a method for receiving data, the method including: receiving a plurality of files blocks, which is a data transmission unit, from a data transmitting apparatus; and, if each of the plurality of file blocks includes one or a plurality of microblocks, which are a unit for recording data of at least one file, reading out data on a microblock basis and recording the data on a storage medium.

According to still further aspects, efficiency is improved in the wide area networks (WAN) environment. In the WAN environment, packet loss or a round trip time is great and thus all of the bandwidths of the network is not used due to a characteristic of a TCP protocol. That is, an amount of packets that can be transmitted may be reduced as the packet loss occurs and thus a window is reduced, or a transmission speed is noticeably decreased because acknowledgement is not received and thus the window is not emptied. To solve these problems, a plurality of files are transmitted in a package on a real time basis so that a number of control messages generated when transmission of the files is started and terminated can be reduced. Since the data of the file is not transmitted while the control message is transmitted, the number of control messages is reduced so that data transmission efficiency of the TCP can be greatly improved. Also, files in an application layer are packaged and forwarded to a TCP layer so that the case in which data smaller than the TCP window is transmitted is minimized, thereby, reducing an inefficient operation of the TCP protocol that occurs when the data smaller than the TCP window is transmitted, and as a result, the time required to transmit files can be greatly reduced. Also, the parallel TCP stream is used so that data can be transmitted at a time as much as a sum of windows of the TCP streams. As a result, even if collision occurs when the data is transmitted, more data can be transmitted than in the case of a single TCP stream.

Also, according to still further aspects, information on an offset and a whole file size is used so that downloading of files can be resumed in the parallel TCP stream transmission without a reversion phenomenon. Also, the downloading is resumed using the offset of the transmitted file, so that the already transmitted file can be prevented from being re-transmitted, and as a result, a cost incurred by re-transmission can be saved. Also, the plurality of files is divided into groups and a list is transmitted in advance, and a file to resume download is determined, and the operation of comparing the files to resume download and the operation of transmitting the file to resume download are simultaneously performed, so that data transmission efficiency can be improved.

Additional aspects and advantages of the exemplary embodiments will be set forth in the detailed description, will be obvious from the detailed description, or may be learned by practicing the exemplary embodiments.

BRIEF DESCRIPTION OF THE DRAWINGS

The above and other features and advantages will become more apparent by describing in detail exemplary embodiments with reference to the attached drawings in which:

FIG. 1 is a view illustrating a data transceiver system for transmitting data in parallel according to an exemplary embodiment;
FIG. 2 is a block diagram illustrating a first data transmitting apparatus and a first data receiving apparatus for transmitting data in parallel according to a first exemplary embodiment;
FIG. 3 is a view illustrating a structure of a file block according to an exemplary embodiment;
FIG. 4A is a view illustrating a structure of a file block including one microblock according to an exemplary embodiment;
FIG. 4B is a view illustrating a structure of a file block including a plurality of microblocks according to an exemplary embodiment;
FIG. 5 is a block diagram illustrating a second data transmitting apparatus and a second data receiving apparatus for transmitting data in parallel according to a second exemplary embodiment;
FIG. 6 is a view illustrating a structure of a transmission file list according to an exemplary embodiment;
FIG. 7 is a view illustrating a structure of a metafile according to an exemplary embodiment;
FIG. 8 is a view illustrating a structure of a download resuming list according to an exemplary embodiment;
FIG. 9 is a flowchart illustrating a method for transmitting data in parallel according to a first exemplary embodiment;
FIG. 10 is a flowchart illustrating the method for transmitting the data in parallel of FIG. 9 in detail.;
FIG. 11 is a flowchart illustrating a method for receiving data in parallel according to an exemplary embodiment;
FIG. 12 is a flowchart illustrating a method for transmitting and receiving data in parallel according to another exemplary embodiment; and

FIG. 13 is a flowchart illustrating operation S1230 of FIG. 12 in detail.

DETAILED DESCRIPTION OF EXEMPLARY EMBODIMENTS

Exemplary embodiments will now be described more fully with reference to the accompanying drawings to clarify aspects, features and advantages of the inventive concept. The exemplary embodiments may, however, be embodied in many different forms and should not be construed as limited to the exemplary embodiments set forth herein. Rather, the exemplary embodiments are provided so that this disclosure will be thorough and complete, and will fully convey the scope of the application to those of ordinary skill in the art.

It will be understood that when an element is referred to as being "on" another element, the element can be directly on another element or intervening elements.

If the terms such as 'first' and 'second' are used to describe elements, these element should not be limited by such terms. These terms are used for the purpose of distinguishing one element from another element only. The exemplary embodiments include their complementary embodiments.

Also, it will be understood that when a first element (or first component) is referred to as being operated or executed "on" a second element (or second component), the first element (or first component) can be operated or executed in an environment where the second element (second component) is operated or executed or can be operated or executed by interacting with the second element (second component) directly or indirectly.

Also, it will be understood that when an element, component, apparatus or system is referred to as comprising a component consisting of a program or software, the element, component, apparatus or system can comprise hardware (for example, a memory or a central processing unit (CPU)) necessary for executing or operating the program or software or another program or software (for example, a operating system (OS), a driver necessary for driving a hardware), unless the context clearly indicates otherwise.

Also, it will be understood that an element (or component) can be realized by software, hardware, or software and hardware, unless the context clearly indicates otherwise.

The terms used herein are for the purpose of describing particular exemplary embodiments only and are not intended to be limiting. As used herein, the singular forms "a", "an" and "the" are intended to include the plural forms as well, unless the context clearly indicates otherwise. It will be further understood that the terms "comprises" and/or "comprising," when used in this specification, do not preclude the presence or addition of one or more other components.

Hereinafter, exemplary embodiments will be described in greater detail with reference to the accompanying drawings. The matters defined in the description, such as detailed construction and elements, are provided to assist in a comprehensive understanding of the exemplary embodiments. However, it is apparent that the exemplary embodiments can be carried out by those of ordinary skill in the art without those specifically defined matters. In the description of the exemplary embodiment, certain detailed explanations of related art are omitted when it is deemed that they may unnecessarily obscure the essence of the inventive concept.

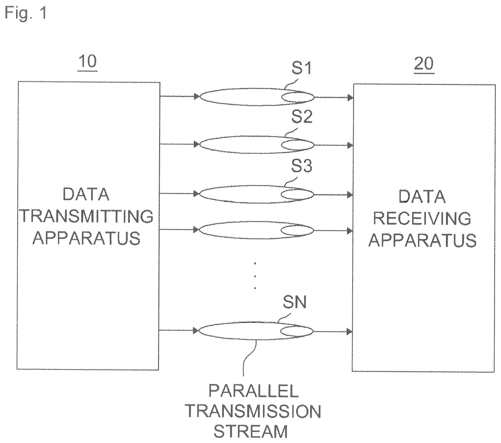

FIG. 1 is a view illustrating a data transceiver system for transmitting data in parallel according to an exemplary embodiment.

Referring to FIG. 1, a data transceiver system for transmitting data in parallel may include a data transmitting apparatus 10 and a data receiving apparatus 20. The data transmitting apparatus 10 may be a first data transmitting apparatus 100 or a second data transmitting apparatus 500, which will be described below, and the data receiving apparatus 20 may be a first data receiving apparatus 200 or a second data receiving apparatus 600, which will be described below.

If a request for file transmission is received, the data transmitting apparatus 10 may generate i) basic control information including attribute information of a file and ii) at least one socket to transmit the file.

The socket is software which connects the data transmitting apparatus 10 and the data receiving apparatus 20 to each other to transmit the file, and one socket establishes one stream. A plurality of streams S1, S2, ..., SN (N is an integer) are provided between the data transmitting apparatus 10 and the data receiving apparatus 20 to transmit data in parallel. The plurality of streams S1, S2, ..., SN may be allocated to at least one communication port and each of the plurality of streams may be realized by multi channels having different bandwidths. For example, the data transmitting apparatus 10 and the data receiving apparatus 20 may transmit and receive the file in a parallel streaming transmission method through a transmission control protocol (TCP) channel, but are not limited to this method.

The basic control information is information which is initially shared by the data transmitting apparatus 10 and the data receiving apparatus 20 to transmit the file. The basic control information may include information such as a file name of a file to be transmitted, a file size, the number of streams, a disk buffer size, a total number of blocks, a socket buffer size, an IP address, port information, and a session identification (ID). The number of streams is a maximum number of streams that can be used for file transmission, the disk buffer size is a size of a block allocated to a buffer to write data on a disk (for example, a second storage medium 250), the socket buffer size is a size of a buffer that is used at a kernel of a transmission protocol, the IP address is an address of an IP that is used for data transmission, the port information is information on a port that is used for data transmission, and the session ID is an ID of each stream.

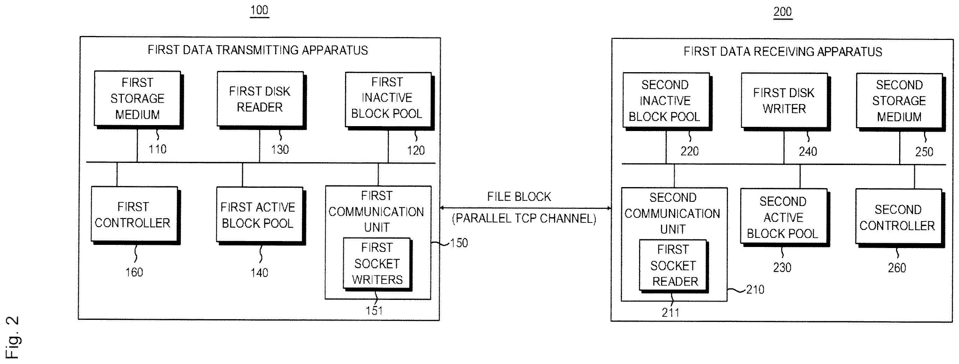

FIG. 2 is a block diagram illustrating a first data transmitting apparatus 100 and a first data receiving apparatus 200 for transmitting data in parallel according to a first exemplary embodiment.

Referring to FIG. 2, the first data transmitting apparatus 100 may include a first storage medium 110, a first inactive block pool 120, a first disk reader 130, a first active block pool 140, a first communication unit 150, and a first controller 160.

The first storage medium 110 may store a plurality of files to be transmitted to the first data receiving apparatus 200. The first storage medium 110 may be a high-capacity storage apparatus such as a hard disk drive.

The first inactive block pool 120 stores (or preserves) a plurality of file blocks in which data is not recorded for the efficient use of a memory. The file block is used when the first disk reader 130 records a file to be transmitted from among the plurality of files stored in the first storage medium 110. The first inactive block pool 120 may be a storage apparatus such as a memory, for example, and the first active block pool 140, a second inactive block pool 220, a second active block pool 230, a third inactive block pool 530, a third active block pool 550, a fourth inactive block pool 630, and a fourth active block pool 550, which will be described below, may be a storage apparatus such as a memory. Also, although the first inactive block pool 120 and the first active block pool 140 are separate function blocks in FIG. 2, they should not be interpreted as physically separate memories, and it should be understood that the first inactive block pool 120 and the first active block pool 140 may be realized by one or three or more memories. It should be also understood that i) the second inactive block pool 220 and the second active block pool 230, ii) the third inactive block pool 530 and the third active block pool 550, and iii) the fourth inactive block pool 630 and the fourth active block pool 550 are not limited to a specific number of physical memories.

Hereinafter, files that are transmitted in a package to the first data receiving apparatus 200 from among the plurality of files will be referred to as "files to be transmitted", and a first file and a second file will be described as an example of the files to be transmitted.

"Transmitting in a package" or "package transmission" refers to an operation of transmitting the first file and the second file through a single file block. Specifically, if the file block has an empty space to record other files after having recorded the first file, the second file is recorded in whole or in part on the file block. When transmitting the files in the package, the whole of the first file and the whole of the second file may be recorded on one file block, the whole of the first file and a part of the second file may be recorded on one file block, a part of the first file and a part of the second file may be recorded on one file block, or a part of the first file and the whole of the second file may be recorded on one file block.

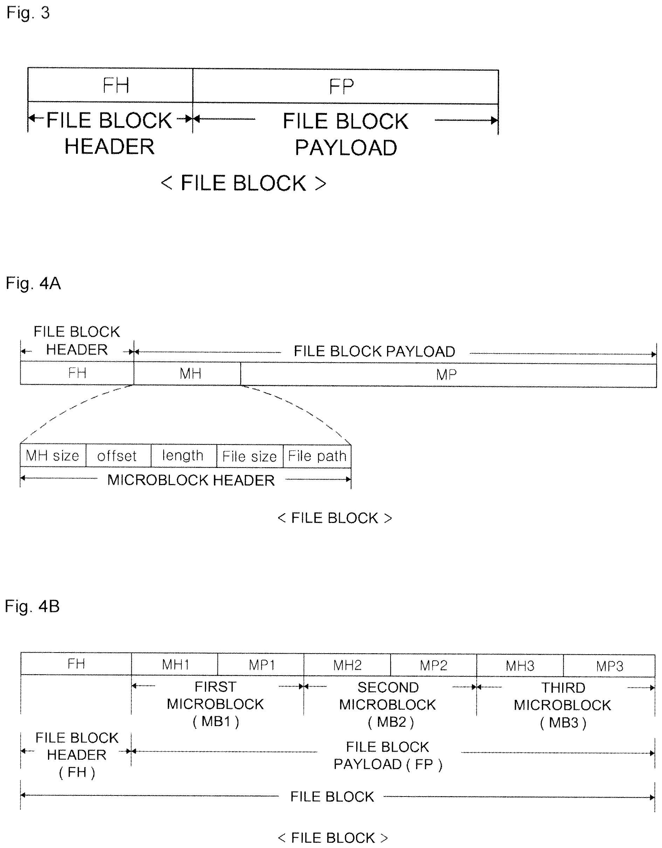

FIG. 3 is a view illustrating a structure of a file block according to an exemplary embodiment.

Referring to FIG. 3, the file block (FB) is divided into a file block header (FH) and a file block payload (FP). The FH may record tag information indicating that the file block is recording data, a size of the FP, and a flag indicating whether the file block is compressed or not. The FP may record data corresponding to the size of the FP and attribute information of the recorded data. As shown in FIG. 3, a plurality of empty file blocks in which no data is recorded may be stored in the first inactive block pool 120.

The first disk reader 130 reads out an empty file block from the first inactive block pool 120 and may divide the file block into one or a plurality of microblocks.

The microblock may include a microblock header (MH) and one microblock payload (MP). The first disk reader 130 may read out data corresponding to a size of each microblock from the files to be transmitted, and may record the data on a corresponding microblock in sequence. That is, the first disk reader 130 may compare the size of the FP and the size of the first file and may divide the file block by generating one microblock or a plurality of microblocks. The microblock is a unit for recording data of at least one file, and has a flexible size to record data.

More specifically, the first disk reader 130 may generate one or more logical microblocks in the FP according to the size of the FP and the size of the first file. For example, if a size of data that can be recorded on one file block is smaller than or equal to that of the first file, the first disk reader 130 may generate one microblock in the file block as shown in FIG. 4A. If the size of the data that can be recorded on one file block is greater than that of the first file, the first disk reader 130 may generate at least two microblocks in the file block, as shown in FIG. 4B, and may record the data on the file block.

FIG. 4A is a view illustrating a structure of a file block including one microblock according to an exemplary embodiment.

Referring to FIG. 4A, the file block is divided into an FH and an FP, and the FP is divided into one MH and one MP. The MH may record an MH size, an offset, a length, a file size, and a file path. The MH size is a size of the MH, the offset is a data address which indicates to which location of the first file the data read out from the first storage medium 110 and recorded on the MP belongs, the length is a size of the MP (that is, a real size of data recorded on the MP), the file size is a whole size of the first file to which the data belongs, and the file path may include a directory of the first storage medium 110 in which the first file is stored, and a file name. The MP may record data of a size that is equal to or smaller than the MP size.

FIG. 4B is a view illustrating a structure of a file block including a plurality of microblocks according to an exemplary embodiment.

Referring to FIG. 4B, the file block is divided into an FH and an FP, and the FP is divided into a plurality of microblock headers MH1, MH2, and MH3, and a plurality of microblock payloads (MP1, MP2, and MP3). Although three microblocks MB1, MB2, and MB3 are illustrated in FIG. 4B, this should not be considered as limiting.

Each of the MH1, MH2, and MH3 records a MH size, an offset, a length, a file size, and a file path as described above in FIG. 4A. For example, the MH1 records an MH size, offset, a length, a file size, and a file path regarding the MP1. Dividing the one file block into the three microblocks MB1, MB2, and MB3 as shown in FIG. 4B means that first to third files are recorded on the one file block and transmitted in a package. The MB1 may record a part of the first file or whole data, the MB2 may record whole data of the second file, and the MB3 may record a part of the third file or whole data.

The operation of the first disk reader 130 generating at least one microblock will be explained below. For example, it is assumed that a user requests the first file and the second file to be transmitted in a package.

1. The first disk reader 130 compares the whole data size of the first file and a maximum size of the FP, and, if the whole first file can be recorded on the entire FP, generates one microblock MB1 and records the whole data of the first file on the MP1. Since, strictly speaking, the data is recorded on the MP of the FP, the expression "comparing the size of the MP and the whole data size of the first file" is exact. However, for the convenience of explanation, the expressions "comparing the size of the FP" and "comparing the size of the MP" will be used interchangeably as long as there is no benefit in distinguishing between them.

2. If the whole data of the first file is greater than the FP, the first disk reader 130 reads out data corresponding to the size of the FP from the first file and generates one MB1, and may record the remaining data of the first file on the next file block. Accordingly, if there is no space to further record other data in the FP, the first disk reader 130 generates one first microblock as shown in FIG. 4A, and records the whole data or some data of the first file on the MP1.

3. On the other hand, if there is a space to record other data after having recorded data of the first file on the FP, the first disk reader 130 reads out the second file to be transmitted next and additionally generates the MB2, so that the file block is filled. That is, the first disk reader 130 compares the remaining space of the FP and the whole data size of the second file, and generates the MB2 in the remaining space of the FP and records the whole data of the second file on the MP2. Accordingly, the two microblocks MB1 and MB2 may be generated in the file block.

4. If the size of the second file is greater than the remaining space of the FP, the first disk reader 130 may read out data corresponding to the remaining space of the FP from the second file, may record the data, and may record the remaining data of the second file on the next file block.

The first active block pool 140 may temporarily preserve the file block in which at least one microblock is generated. That is, the first active block pool 140 may temporarily preserve the file block in which at least one file to be transmitted is recorded.

If the plurality of file blocks in which data is recorded as shown in FIGS. 4A and 4B is preserved in the first active block pool 140, the first communication unit 150 may transmit the plurality of file blocks to the first data receiving apparatus 200. The first communication unit 150 may transmit the plurality of file blocks to the first data receiving apparatus 200 in the parallel TCP stream method. To achieve this, the first communication unit 150 is provided with a plurality of first socket writers 151. The plurality of first socket writers 151 may check whether there is data in the first active block pool 140, and may obtain the file block if any and may transmit the file block to the first data receiving apparatus 200. Each of the plurality of first socket writers 151 may correspond to one TCP stream simultaneously and thus transmits the file blocks in parallel. The plurality of first socket writers 151 may transmit the file blocks to the first inactive block pool 120.

The first controller 160 may control the above-described operation of the first data transmitting apparatus 100 using at least one processor.

The first data receiving apparatus 200 may include a second communication unit 210, a second inactive block pool 220, a second active block pool 230, a first disk writer 240, a second storage medium 250, and a second controller 260.

The second communication unit 210 may receive the file block from the first data transmitting apparatus 100 through a parallel TCP stream. To achieve this, the second communication unit 210 is provided with a plurality of first socket readers 211. The plurality of first socket readers 211 are connected to the plurality of first socket writers 151, respectively, through the single TCP stream.

The second inactive block pool 220 may preserve the empty file blocks shown in FIG. 3. The preserved file block may be used to record data of the file block received through the second communication unit 210.

The first socket readers 211 may obtain the empty file block from the second inactive block pool 220 every time that the file block is received, and may record data of the received file block on the empty file block. The first socket readers 211 may preserve the file block in which the received data is recorded in the second active block pool 230. For example, if the received file block includes three microblocks MB1, MB2, and MB3 as shown in FIG. 4B, the first socket readers 211 may record header information and data of the files on the empty file block in the same format as in FIG. 4B. The first socket readers 211 may repeat the above-described operations until the package transmission of the files is completed.

If each of the received file blocks includes at least one microblock, the first disk writer 240 may read out data on a microblock basis and may record the data on the second storage medium 250.

Specifically, while the first socket readers 2110 are performing the above-described operation, the first disk writer 240 checks whether there is a file block in the second active block pool 230. If there is a file block in the second active block pool 230, the first disk writer 240 may record data recorded on the MP on the second storage medium 250 with reference to information recorded on the MH of the file block. If the data recorded on the file block, that is, the MP is recorded on the second storage medium 250, the first disk writer 240 may transmit the empty file block to the second inactive block pool 220.

The operation of the first disk writer 240 recording data which is recorded on the at least one microblock on the second storage medium 250 will be explained below.

First, if the file block includes one microblock as shown in FIG. 4A, the first disk writer 240 may identify an offset of the MH and may record the data recorded on the MP on a location of the second storage medium 250 corresponding to the offset. For example, if the data recorded on the MP is data of the first file and the offset is '0', the first disk writer 240 may determine that the data is located at a head area of the first file and may record the data on a head area from among areas of the second storage medium 250 on which the first file is to be recorded. The first disk writer 240 can identify the whole size of the first file based on the file size of the MH, and thus knows a size of the second storage medium 250 to be occupied by the first file and may allocate an area to record the first file in advance.

Also, if the file block includes three microblocks MB1, MB2, and MB3 as shown in FIG. 4B, the first disk writer 240 identifies a file name based on a file path of the MH1, and, if the identified file name is the first file, may record data recorded on the MP1 on the second storage medium 250 with reference to an offset recorded on the MH1. After that, the first disk writer 240 identifies a file name based on a file path of the MH2, and, if the identified file name is the second file, may record data recorded on the MP2 on the second storage medium 250 with reference to an offset recorded on the MH2. The process of recording data recorded on the MB3 is the same as those described above.

The second controller 260 may control the above-described operation of the first data receiving apparatus 200 using at least one processor.

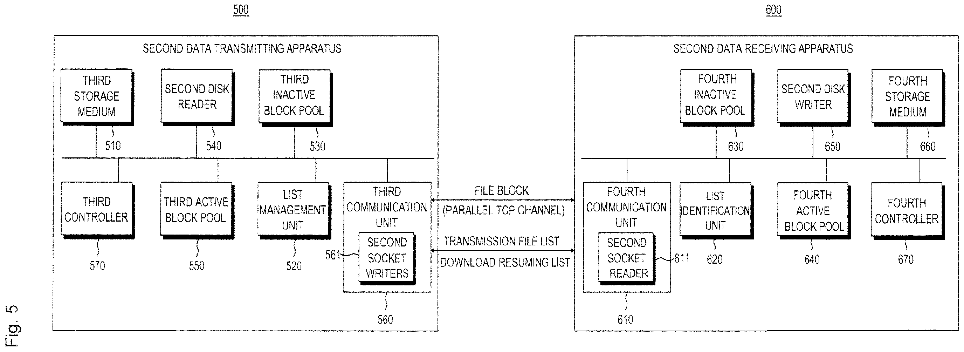

FIG. 5 is a block diagram illustrating a second data transmitting apparatus 500 and a second data receiving apparatus 600 for transmitting data in parallel according to a second exemplary embodiment.

The second data transmitting apparatus 500 and the second data receiving apparatus 600 transmit files in a package and resume download. To achieve this, the second data transmitting apparatus 500 may include a third storage medium 510, a list management unit 520, a third inactive block pool 530, a second disk reader 540, a third active block pool 550, a third communication unit 560, and a third controller 570.

Overall operations of the third storage medium 510, the third inactive block pool 530, the second disk reader 540, the third active block pool 550, the third communication unit 560, and the third controller 570 shown in FIG. 5 are the same as or similar to the operations of the first storage medium 110, the first inactive block pool 120, the first disk reader 540, the first active block pool 140, the first communication unit 150, and the first controller 160 described above with reference to FIG. 2, and thus a detailed description thereof is omitted.

The list management unit 520 allocates indexes to files to be transmitted to the second data receiving apparatus 600 in a package, and may divide the files to be transmitted into a plurality of transmission file lists. For example, if 100 files are to be transmitted to the second data receiving apparatus 600, the list management unit 520 allocates indexes 0 to 99 to the 100 files and divides the 100 files by 20, thereby generating five transmission file lists, that is, first to fifth file lists. The list management unit 520 additionally describes information on indexes, file names, and whole file sizes of files included in each transmission file list on each transmission file list, and transmits the transmission file list to the second data receiving apparatus 600.

The list management unit 520 may control the plurality of transmission file lists to be transmitted to the second data receiving apparatus 600. Also, the list management unit 520 may control the next transmission file list to be transmitted after receiving a response (for example, a download resuming list) to the transmission file list transmitted earlier from a list identification unit 620 of the second data receiving apparatus 600.

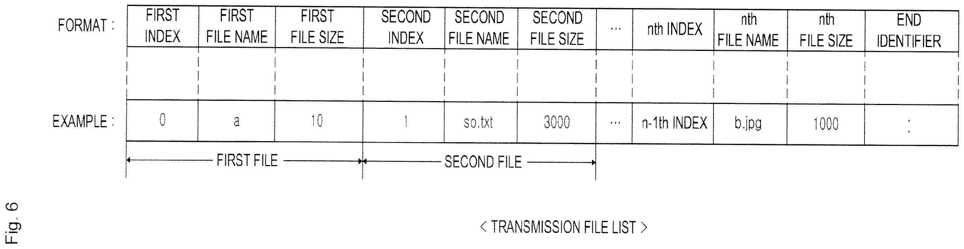

FIG. 6 is a view illustrating a structure of a transmission file list according to an exemplary embodiment.

Referring to FIG. 6, the list management unit 520 may generate a transmission file list including first to nth indexes, first to nth file names, first to nth file sizes, and an end identifier. The first to the nth indexes are indexes that are allocated to n number of files included in the transmission file list. The first to the nth file names are file names of the files corresponding to the first to the nth indexes. The first to the nth file sizes are sizes of the files corresponding to the first to the nth indexes. The end identifier is an end delimiter for indicating that there is not any other file to be transmitted, and may be additionally described on the final transmission file list.

If the number of files to be transmitted is m (m>n), the list management unit 520 may generate two or more transmission file lists shown in FIG. 6.

Referring to FIG. 6, which illustrates an example of the transmission file list, the transmission file list includes file information on first to nth files. Specifically, the transmission file list includes indexes of the first to the nth files, 0, 1, ..., n-1; files names of the first to the nth files, 'a', 'so.text',..., 'b.jpg', and sizes of the first to the nth files, 10 bytes, 3000 bytes, ..., 1000 bytes.

Referring back to FIG. 5, the third communication unit 560 transmits the plurality of transmission file lists to the second data receiving apparatus 600 in sequence through an independent channel which is different from the parallel TCP stream. While transmitting the plurality of transmission file lists to the second data receiving apparatus 600 in sequence, the third communication unit 560 may transmit the file blocks to the second data receiving apparatus 600 through the parallel TCP stream.

If a download resuming list is received from the second data receiving apparatus 600, the second disk reader 540 identifies a file corresponding to an index included in the download resuming list from among the files to be transmitted, and records data from a location of the identified file corresponding to an offset included in the download resuming list on the file block, and may try to transmit the data to resume download. The second disk reader 540 may record data of a file to resume download on the file block using the file block (or the microblock) explained above with reference to FIGS. 4A or 4B.

The second data receiving apparatus 600 includes a fourth communication unit 610, a list identification unit 620, a fourth inactive block pool 630, a fourth active block pool 640, a second disk writer 650, a fourth storage medium 660, and a fourth controller 670. The overall operations of the fourth communication unit 610, the fourth inactive block pool 630, the fourth block pool 640, the second disk writer 650, the fourth storage medium 660, and the fourth controller 670 shown in FIG. 5 include the operations of the second communication unit 210, the second inactive block pool 220, the second active block pool 230, the first disk writer 240, the second storage medium 250, and the second controller 260, and thus a detailed description is omitted.

The fourth communication unit 610 receives the transmission file lists from the second data transmitting apparatus 500 in sequence, and may transmit download resuming lists (which are generated by the list identification unit 620 which will be described below) to the second data transmitting apparatus 500 in response to the transmission file lists. Also, while receiving the transmission file lists, the fourth communication unit 610 may receive the file blocks from the second data transmitting apparatus 500 through the parallel TCP stream. The transmission file list is one of the plurality of transmission file lists which are generated by dividing the files to be transmitted by the second data transmission apparatus 500, and may include information on indexes of files included in one transmission file list, file names, and the whole file size.

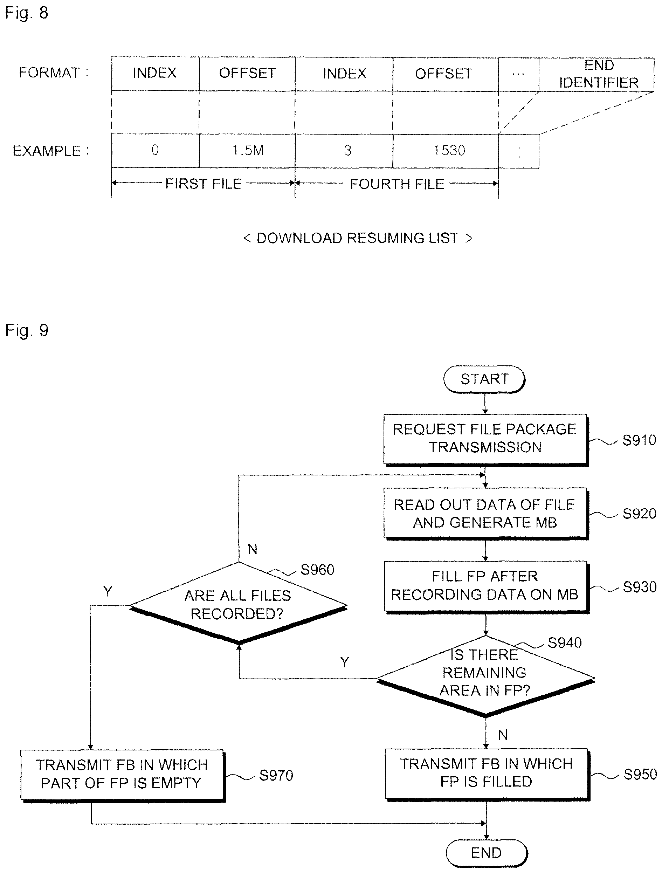

The list identification unit 620 compares the transmission file list received from the second data transmitting apparatus 500 and the plurality of files already received through the file block, determines a file to resume download from among the plurality of files already received, generates a download resuming list including an index and an offset-indicating a start address of data of the determined file to resume download-of the determined file, and transmits the download resuming list to the second data transmitting apparatus 500. The download resuming list generated by the list identification unit 620 will be explained with reference to FIG. 8.

If the files included in the transmission file list are not stored in the fourth storage medium 660, that is, if the transmission file list is received for the first time, the list identification unit 620 may generate a download resuming list for requesting all of the files included in the transmission file list to be transmitted.

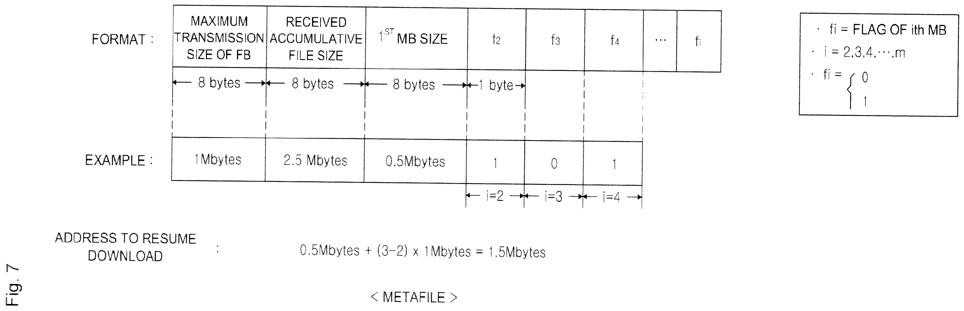

FIG. 7 is a view illustrating a structure of a metafile according to an exemplary embodiment.

Referring to FIG. 7, the second disk writer 650 may generate a metafile which includes a maximum transmission size of the FB, a received accumulative file size, a size of the first MB (or FB), a flag of an ith MB (or FB), and an end identifier.

If the first file is received, the maximum transmission size of the FB indicates a maximum transmission capacity allocated to the file block transmitting the first file. The received accumulative file size is an accumulative size (accumulative amount) of the first file received through at least one file block. For example, if the first file is received through three file blocks, the received accumulative file size is a sum of sizes of the first file recorded on the three file blocks. If one of the file blocks transmitting the first file is not received, the received accumulative file size of the first file may be smaller than the real size of the first file.

The size of the first MB is a size of a microblock which initially transmits the first file, and may be smaller than or equal to a maximum size of the MP of the FP. This is because that, if the size of the first MB is smaller than the FP, at least two files are recorded on one file block. The flag of the ith MB is information indicating whether MBs are received or not after transmitting the first file continuously. i=2, 3, ..., m (m is a positive number). If fi=0, the ith MB in which data of the first file is recorded is not received, and if fi=1, the ith MB is received.

Referring to FIG. 7, which shows an example of the metafile, if one FB transmits data of 1 Mbytes to the maximum, the second disk writer 650 records 1 Mbytes in the "maximum transmission size of the FB". If the first file is received through the four file blocks (first to fourth file blocks), the second disk writer 650 records 2.5 Mbytes, which is a sum of sizes of the first file recorded on the four file blocks, in the "received accumulative file size". If the first file block transmits the first file first, the second disk writer 650 records a size of data of the first file recorded on the first file block, that is, the size of the MB recording the data of the first file, in the "size of the first MB". If the second file block and the fourth file block which record the remaining data of the first file are normally received, but the third file block is not received, the second disk writer 650 records '1' in 'f2', records '0' in 'f3', and records '1' in 'f4'.

The second disk writer 650 may generate the metafile and simultaneously may store the data recorded on the MP in the fourth storage medium 660 with reference to the offset recorded on the MH. The generated metafile may be stored in a memory (not shown) used by the second disk writer 650. Accordingly, the memory may store the metafiles of the files received from the second data transmitting apparatus 500.

The second disk writer 650 may generate a metafile for each of at least one file received through at least one file block. If it is determined that all of the files is transmitted without disconnection or omission, the second disk writer 650 may delete the metafile. If all flags of the metafile are 1 and the size of the first MB is not 0, the second disk writer 650 determines that all of the files are received and stored in the fourth storage medium 660.

Hereinafter, the operation of the list identification unit 620 generating a download resuming list with reference to the metafile stored in the memory and the operation of the list management unit 520 re-transmitting data of a file to resume download.

If a file corresponding to a file name included in the transmission file list received from the second data transmitting apparatus 500 is the first file which is one of the plurality of files already received, and if a metafile of the first file exists, the list identification unit 620 may determine that the first file is a file to resume download. That is, the list identification unit 620 identifies files included in the transmission file list and determines a file including a metafile from among the identified files to resume download. The list identification unit 620 may generate a download resuming list using information on the files to resume download.

FIG. 8 is a view illustrating a structure of a download resuming list according to an exemplary embodiment.

Referring to FIG. 8, the list identification unit 620 may generate a download resuming list including indexes, offsets, and end identifiers of files to resume download. The list identification unit 620 may not include files names of the files to resume download to minimize the amount of data to be transmitted. This is optional.

The indexes of the files to resume download are unique identifiers allocated to the files, and may be known from the transmission file list of FIG. 6. The offset indicates a start address of the data of the file to resume download. The end identifier is an end delimiter informing that there is not any other file to resume download in the current transmission file list if information on the files to resume download from among the files included in the transmission file list is recorded on the download resuming list.

Referring to FIG. 8, which shows an example of the download resuming list, if the indexes of the files determined to resume download from among the files included in one transmission file list are '0' and '3', the list identification unit 620 records '0' and '3' on an index area.

The list identification unit 620 may calculate the offset, which is a start address of the data to resume download, with reference to the size of the first MB and flag information of a corresponding metafile.

Specifically, if the first file is determined to resume download and the first file is received through a plurality of file blocks, and if a transmission capacity of the first file block (i=1) (the size of the first MB) which firstly transmits the first file is recorded as 0 on the metafile of the first file, the list identification unit 620 may generate a download resuming list in which the offset of the first file is 0. In this case, the second data transmitting apparatus 500 re-transmits the first file from the beginning.

Also, if the first file is received through a plurality of file blocks, and if the transmission capacity of the first file block (i=1) which transmits the first file first is recorded as k byte (k is a positive number) on the metafile and the flag of the file block which transmits the first file for the ith time (i=2, 3, ...m) is 0, the list identification unit 620 may calculate 'k byte + (i-2)*n byte' as the offset of the first file. n byte is the "maximum transmission size of the FB" illustrated in FIG. 7.

Referring to FIG. 8, which illustrates an example of the download resuming list, if the indexes of the first file and the second file which are determined to resume download from among the files included in the one transmission file list are '0' and '3', respectively, the list identification unit 620 records '0' and '3' on the index area. If the example of the metafile of FIG. 7 is the metafile of the first file, the list identification unit 620 calculates the offset of the first file as follows:

$$\text{Offset} = k \text{ byte} + (i-2)*n \text{ byte} = 0.5 \text{ Mbytes} + (3-2)*1 \text{ Mbytes} = 1.5 \text{ Mbytes}$$

Accordingly, the list identification unit 620 may record '0' which is the index of the first file and 1.5 Mbytes which is the offset on the download resuming list as shown in FIG. 8. In the same way, the list identification unit 620 may record '3' which is the index of the second file and 1530 bytes, which is the offset, on the download resuming list as shown in FIG. 8. The second data transmitting apparatus 500, which receives the download resuming list shown in FIG. 8, may identify a file corresponding to the indexes included in the download resuming list and may re-transmit data of the identified files from a location corresponding to the offset (or a next location) to the second data receiving apparatus 600 using a file block in a package.

The list management unit 520, the list identification unit 620, the second disk reader 540, the second disk writer 650, the second socket writers 561, and the second socket readers 611 according to the second exemplary embodiment may be operated as threads and thus may perform operations simultaneously.

FIG. 9 is a flowchart illustrating a method for transmitting data in parallel according to a first exemplary embodiment.

A first data transmitting apparatus which performs the method for transmitting the data in parallel of FIG. 9 may be the first data transmitting apparatus 100 explained above with reference to FIG. 2.

Referring to FIG. 9, the first data transmitting apparatus may receive a request for package transmission of a plurality of files from a user (S910). Hereinafter, package transmission of a first file and a second file will be explained for example.

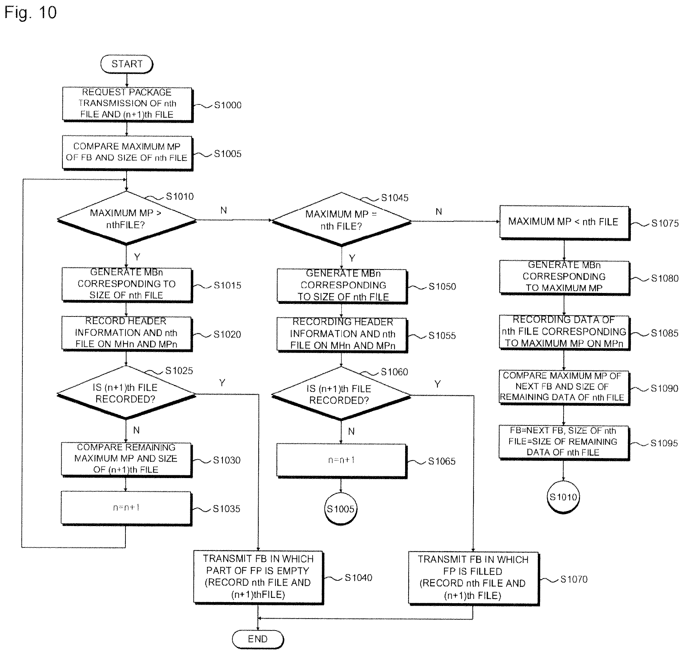

The first data transmitting apparatus may read out data of the first file from among the files requested to be transmitted in a package from a storage medium, and may generate a MB (S920). In operation S920, the first data transmitting apparatus may generate an MB by comparing a maximum size of an FP which is read out from a inactive block pool and a whole size of the first file before the data of the first file is read out. This will be explained below with reference to FIG. 10.

The first data transmitting apparatus may record the read-out data on an MP of the generated MB, and fills the FP with the MB (S930).

The first data transmitting apparatus checks whether there is a remaining area to additionally record data in the FP (S940).

If there is no remaining area (S940-N), the first data transmitting apparatus may transmit the FB in which the FP is filled with data to a first data receiving apparatus in a parallel TCP stream method.

On the other hand, if there is a remaining area (S940-Y), it may be checked whether all files to be transmitted in a package are recorded on the FB (S960). In operation S960, the first data transmitting apparatus may determine that the first file is recorded on the FB and may check whether there is a second file to be additionally transmitted.

If all of the files to be transmitted in the package is recorded (S960-Y), the first data transmitting apparatus may transmit the FB in which a part of the FP is empty to the first data receiving apparatus (S970).

If files to be transmitted in the package remain (S960-N), the first data transmitting apparatus resumes operation S920 to read out data of the second file, and may repeat operations S920 to 970.

FIG. 10 is a flowchart illustrating the method for transmitting the data in parallel of FIG. 9 in detail.

Referring to FIG. 10, the first data transmitting apparatus may receive a request for package transmission of a plurality of files from the user (S1000). Hereinafter, package transmission of an nth file and an (n+1)th file will be explained for example.

The first data transmitting apparatus may compare a maximum size of an MP which is allocated to an FB and a data size of the nth file (S1005). In operation S1005, the first data transmitting apparatus obtains an FB from a inactive block pool and reads out the nth file from a first storage medium, and compares the sizes.

If the maximum MP is greater than the data of the nth file (S1010-Y), the first data transmitting apparatus may generate a microblock (hereinafter, MBn) corresponding to the data size of the nth file (S1015).

The first data transmitting apparatus may record header information and the data of the nth file on MHn and MPn of the MBn, respectively (S1020). The header information recorded in operation S1020 has been described above with reference to FIG. 4A.

The first data transmitting apparatus checks whether the (n+1)th file which has been requested to be transmitted in a package is recorded or not, and, if not, may compare the maximum MP which remains after excluding the MBn from the FP and the data size of the (n+1)th file (S1030).

The first data transmitting apparatus sets 'n=n+1' (S1035) and resumes operation S1010 to repeat operations S1015 to S1020.

On the other hand, if it is checked that the (n+1)th file is recorded (S1025-Y), the first data transmitting apparatus may transmit the FB in which a part of the FP is empty to the first data receiving apparatus (S1040). The nth file and the (n+1)th file are recorded on the file block which is transmitted in operation S1040 so that they can be transmitted in a package.

On the other hand, in operation S1010, if the maximum MP is identical to the data size of the nth file (S1045-Y), the first data transmitting apparatus generates a MBn corresponding to the data size of the nth file (S1050).

The first data transmitting apparatus may record header information and data of the nth file on the MHn and the MPn of the MBn (S1055).

If the data of the nth file is recorded, the first data transmitting apparatus checks whether the (n+1)th file which has been requested to be transmitted in a package is recorded or not, and, if not (S1060-N), the first data transmitting apparatus sets 'n=n+1' (S1065) and resumes operation S1005.

On the other hand, if it is checked that the (n+1)th file is recorded (S1060-Y), the first data transmitting apparatus may transmit the FB in which the FP is filled to the first data receiving apparatus (S1070). The nth file and the (n+1)th file are recorded on the file block, which is transmitted in operation S1070, and are transmitted in a package.

On the other hand, if the maximum MP is not identical to the data size of the nth file (S1045-N) and if the data size of the nth file is greater than the maximum MP (S1075), the first data transmitting apparatus may generate an MBn corresponding to the size of the maximum MP (S1080).

The first data transmitting apparatus may record header information and data of the nth file on the MHn and the MPn of the MBn (S1085).

The first data transmitting apparatus may compare a size of remaining data of the nth file and a size of a maximum MP of a next FB (S1090).

The first data transmitting apparatus sets 'FB=next FB' and sets 'size of nth file=size of remaining data of nth file' (S1095), and may resume operation S1010. Accordingly, the first data transmitting apparatus repeats operation S1010 to S1095 so that the remaining data of the nth file is recorded on the next FB.

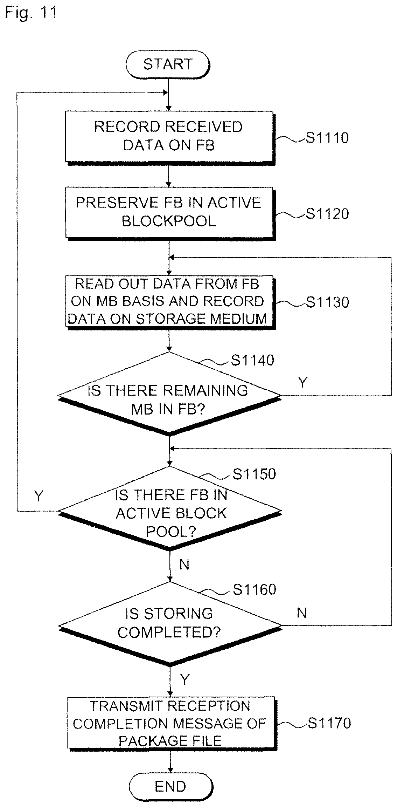

FIG. 11 is a flowchart illustrating a method for receiving data in parallel according to an exemplary embodiment.

A first data receiving apparatus which performs the method for receiving the data in parallel of FIG. 11 may be the first data receiving apparatus 200 which has been described above with reference to FIG. 2.

Referring to FIG. 11, the first data receiving apparatus may record header information and data of an FB received from the first data transmitting apparatus on an empty FB (S1110). If the received FB includes a plurality of MBs in operation S1110, the first data receiving apparatus may divide the empty FB into a plurality of MBs and may record the data in the same way.

The first data receiving apparatus preserves the FB on which the header information and the data are recorded in an active block pool (S1120).

The first data receiving apparatus may read out data from the file block which is preserved in the active block pool on an MB basis, and may record the data on a second storage medium (S1130). In operation S1130, the first data receiving apparatus may record the data recorded on the MP on the second storage medium with reference to an offset recorded on the MH.

If there is a MB remaining in the FB (S1140-Y), the first data receiving apparatus repeats operation S1130.

On the other hand, if there is no microblock remaining in the FB (S1140-N), that is, if all of the data recorded on the FP is recorded on the second storage medium, it is checked whether there is other FBs in the active block pool (S1150).

If there is other FBs in the active block pool (S1150-Y), the first data receiving apparatus resumes operation S1110.

On the other hand, if there is no any other FB in the active block pool (S1150-N), the first data receiving apparatus checks whether files requested to be transmitted in a package have been stored or not (S1160). In operation S1160, the first data receiving apparatus checks that the files have been stored if a size recorded on a file size of the MH is identical to a size of the actually received data.

If it is checked that the files have been stored (S1160-Y), the first data receiving apparatus may transmit a reception completion message to the first data transmitting apparatus to inform that the files have been received in a package (S1170).

If it is checked that the files have not been stored (S1160-N), the first data receiving apparatus may resume operation S1150.

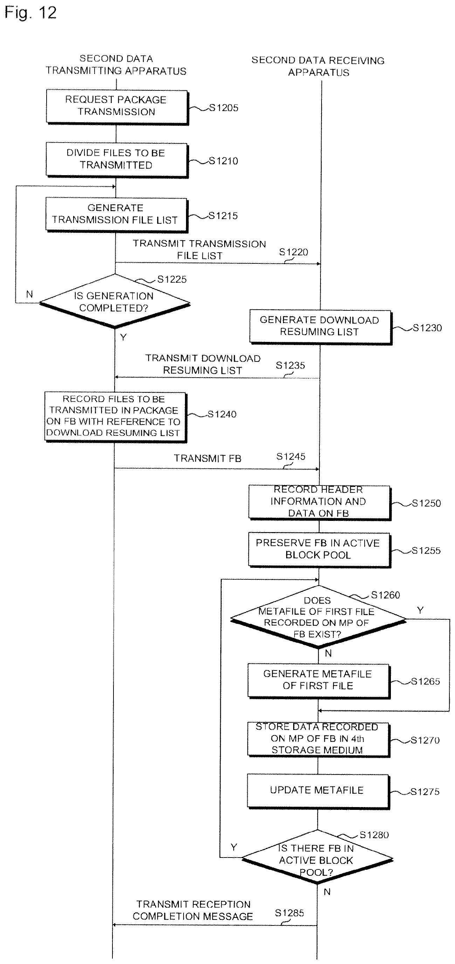

FIG. 12 is a flowchart illustrating a method for transmitting and receiving data in parallel according to another exemplary embodiment.

A second data transmitting apparatus and a second data receiving apparatus which perform the method for transmitting and receiving the data in parallel of FIG. 12 may be the second data transmitting apparatus 500 and the data receiving apparatus 600 which have been described above with reference to FIG. 5.

Referring to FIG. 12, the second data transmitting apparatus may receive a request for package transmission of a plurality of files from a user (S1205).

The second data transmitting apparatus may divide files to be transmitted in a package into a plurality of groups (S1210).

The second data transmitting apparatus may generate a transmission file list using the files belonging to each group as shown in FIG. 6 (S1215). That is, the second data transmitting apparatus may generate one transmission file list for one group. The transmission file list includes information on indexes of the files belonging to one group, file names, and whole file sizes.

The second data transmitting apparatus may transmit the transmission file list generated in operation S1215 to the second data receiving apparatus (S1220).

The second data transmitting apparatus checks whether generation of transmission file lists for other groups has been completed or not while transmitting the generated transmission file list (S1225).

If the generation of the transmission file lists for other groups has not been completed (S1225-N), the second data transmitting apparatus may repeat operations S1215 and S1220 to generate transmission file lists for other groups and transmit the transmission file lists.

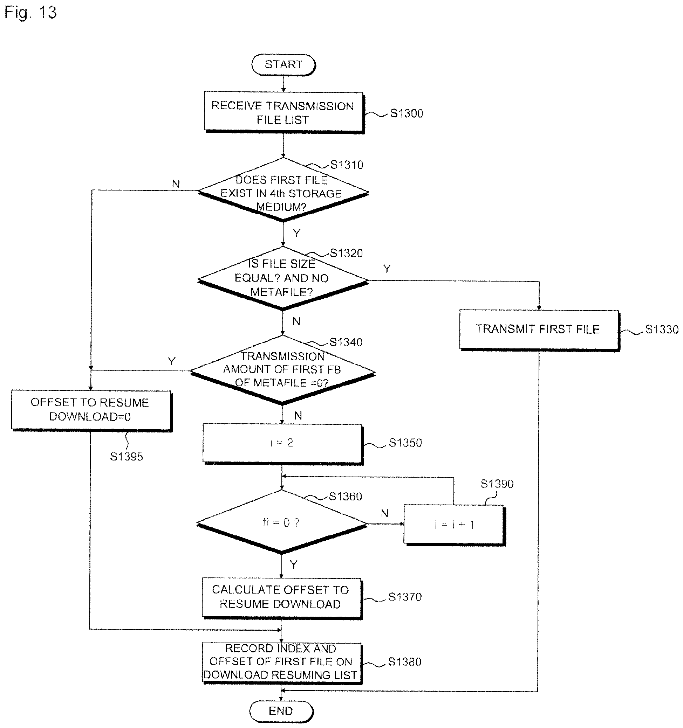

The second data receiving apparatus may compare the transmission file list received in operation S1220 and a plurality of files already received through an FB, may determine a file to be resume download from among the plurality of files already received, and may generate a download resuming list including an index and offset- indicating a start address of data of the file determined to be resume download- of the determined file (S1230). Operation S1230 will be explained in detail below with reference to FIG. 13.

The second data receiving apparatus may transmit the generated download resuming list to the second data transmitting apparatus (S1235).

The second data transmitting apparatus may record data of files to be transmitted in a package on at least one FB with reference to the received download resuming list (S1240). In operation S1240, the second data transmitting apparatus may record the data on the FB on an MB basis as described above with reference to FIGS. 9 and 10.

The second data transmitting apparatus may transmit the at least one FB on which the data is recorded in operation S1240 to the second data receiving apparatus (S1245). In operations S1240 and S1245, the second data transmitting apparatus may identify a file corresponding to the index included in the download resuming list from a third storage medium, and may initially transmit or re-transmit data from a location (or a next location) of the identified file corresponding to the offset to the second data receiving apparatus using the FB in a package. For example, if the offset of the download resuming list is '0', the second data transmitting apparatus may transmit the file from the beginning, and, if the offset is m bytes (m is a positive number) rather than '0', the second data transmitting apparatus may transmit data from a location of the file corresponding to m bytes.

The second data receiving apparatus may record header information and data of the received least one FB on at least one empty FB (S1250). If the received FB includes a plurality of MBs, the second data receiving apparatus may divide the empty FB into a plurality of MBs and may record the data in the same way in operation S1250.

The second data receiving apparatus preserves the at least one file block on which the header information and the data are recorded in an active block pool in sequence (S1255).

The second data receiving apparatus may check whether there is a metafile of a file recorded on a micro file payload (hereinafter, a first file) in the FB preserved in the active block pool (S1260).

If there is no metafile of the first file in the second data receiving apparatus (S1260-N), the second data receiving apparatus may generate a metafile of the first file (S1265). In operation S1265, the second data receiving apparatus may generate a metafile in the same format as in FIG. 7.

The second data receiving apparatus may store data of the first file recorded on the MP of the FB in a fourth storage medium (S1270).

If the first file is received through a plurality of file blocks, the second data receiving apparatus may update the metafile every time that the FBs are received (S1275).

If all of the data recorded on the FB is recorded on a fifth storage medium, the second data receiving apparatus may check whether there are other FBs in the active file pool (S1280).

If there are other FBs in the active block pool (S1280-Y), the second data receiving apparatus resumes operation S1260.

On the other hand, if there are no any other FBs in the active bock pool (S1280-N), the second data receiving apparatus may check whether storing of the files has been completed or not, and may transmit a reception completion message to the second data transmitting apparatus to inform that receiving of the package of files or receiving of files to resume download has been completed (S1285).

In the above-described method for transmitting and receiving the data in parallel, the second data transmitting apparatus may perform operations S1215 to S1225 in parallel while the second data receiving apparatus generates the download resuming list, and may perform operations S1240 to 1245 in parallel while performing operations S1215 to S1235.

FIG. 13 is a flowchart illustrating operation S1230 of FIG. 12 in detail.

Referring to FIG. 13, the second data receiving apparatus receives the transmission file list from the second data transmitting apparatus (S1300).

The second data receiving apparatus checks whether a first file to be currently processed from among files included in the received transmission file list is stored in the fifth storage medium or not (S1310). The second data receiving apparatus may check whether the first file is stored or not by comparing a file name or an index of the first file recorded on the transmission file list and a file name or an index stored in the fifth storage medium.

If the first file is stored in the fifth storage medium (S1310-Y), the second data receiving apparatus may check whether a size of the first file recorded on the transmission file list is equal to a size of the first file stored in the fifth storage medium or not, and whether a metafile of the first file is stored in a memory or not (S1320).

If the sizes are equal to each other and if the metafile of the first file is not stored (S1330-Y), the second data receiving apparatus determines that transmission of the first file has been completed and does not resume download (S1330).

On the other hand, if the sizes are equal to each other but the metafile of the first file is not stored, or if the sizes are different and the metafile is not stored (S1330-N), the second data receiving apparatus checks whether a size of a first microblock (1$^{ST}$MB) of the metafile is '0' or not (S1340).

If the size of the first MB of the metafile is not '0' (S1340-N), the second data receiving apparatus sets i=2 (i is an MB which transmits the first file for the ith time) since the file block (or the microblock) which has transmitted the first file for the first time is received. (S1350).

The second data receiving apparatus may check whether a fi which is a flag of the second MB (i=2) is '0' or not (S1360).

If fi=0 (i=2) in operation S1360 (S1360-Y), the second data receiving apparatus may determine that the second file block which has transmitted the first file is not received and may calculate an offset, which is an address to resume download (S1370). In operation S1370, the second data receiving apparatus may calculate the offset of the first file using 'offset = k byte + (i-2)*n byte'. The calculated offset may be equal to a received accumulative file size, which is recorded on the metafile of the first file.

The second data receiving apparatus may record the index of the first file and the offset calculated in operation S1370 on the download resuming list (S1380).

FIG. 13 illustrates the process of obtaining the offset of the first file from among the plurality of files included in one transmission file list, and the second data receiving apparatus may repeat operations S1320 to S1380 with respect to all of the files included in the transmission file list. Accordingly, the second data receiving apparatus may finally generate the download resuming list which is a response to one transmission file list and may transmit the download resuming list to the second data transmitting apparatus.

While exemplary embodiments have been particularly shown and described above, it will be understood by those of ordinary skill in the art that various changes in form and details may be made therein without departing from the scope of the present invention as defined by the following claims.

**Claims**

1. A data transmitting apparatus (100; 500) adapted for transmitting a file block, the apparatus comprising:

   a disk reader (130; 540) adapted for comparing a whole data size of a first file among a plurality of files to be transmitted to a maximum microblock payload size of the file block, wherein:

   if the whole data size of the first file is equal to the maximum microblock payload size of the file block, the disc reader is further adapted for generating (S1050) one microblock for the file block and recording (S1055) the whole data of the first file on a microblock payload of the generated microblock, if the whole data size of the first file is greater than the maximum microblock payload size of the file block, the disc reader is further adapted for generating (S1080) one microblock for the file block, recording (S1085) data from the first file corresponding to the maximum microblock payload size on a microblock payload of the generated microblock, and recording remaining data of the first file on further file blocks; and

   if the whole data size of the first file is less than the maximum microblock payload size of the file block, the disc reader is further adapted for generating (S1015) a first microblock for the file block, recording (S1020) the whole data of the first file on a microblock payload of the generated first microblock, for generating a second microblock for the file block and for recording data from a second file among the plurality of files to be transmitted on a microblock payload of the generated second microblock; and

   a communication unit (150; 560) adapted for transmitting the file block to a data receiving apparatus (200; 600) using a parallel stream, wherein the one or more generated microblocks are included in the file block, wherein each of the one or more generated microblocks is divided into a microblock header and a microblock payload, and wherein the disk reader is further adapted for recording an offset, which indicates an address of data of a file recorded on the microblock payload, on the microblock header, and for recording the file on the microblock payload.

2. The data transmitting apparatus as claimed in claim 1, wherein, if the entire file block is filled with the data of the first file from among the plurality of files to be transmitted, the disk reader is further adapted for dividing the file block into one microblock header and one microblock payload.

3. The data transmitting apparatus as claimed in claim 1, further comprising a list management unit (520) adapted for generating (S1215) a plurality of transmission file lists from the plurality of files to be transmitted to the data receiving apparatus, and for transmitting the plurality of transmission file lists to the data receiving apparatus, wherein each of the plurality of transmission file lists comprises information on indexes, file names, and whole file sizes of files included in each transmission file list.

4. The data transmitting apparatus as claimed in claim 3, wherein, while the plurality of transmission file lists are transmitted to the data receiving apparatus in sequence, the communication unit is further adapted for transmitting the file block comprising the one or more microblocks on which all of the data is recorded using a parallel stream.

5. The data transmitting apparatus as claimed in claim 3, wherein the disk reader is further adapted for identifying a file corresponding to an index included in a download resuming list received from the data receiving apparatus from the plurality of files, and for starting to transmit to resume download by recording data of the identified file from a location corresponding to an offset included in the download resuming list on the file block, wherein the download resuming list comprises an index and an offset of a file determined to resume download, the offset indicating a start address of data of the file determined to resume download.

6. A method for receiving data, the method comprising:

receiving a plurality of file blocks carrying at least one file over a parallel stream from a data transmitting apparatus (100; 500), wherein each of the plurality of file blocks comprises one or more microblocks, each microblock comprising a microblock header and a microblock payload, wherein if a file block comprises more than one microblock, the microblocks of the file block respectively comprise data corresponding to different files; and reading out (SS1130) data from each microblock on a microblock basis and recording the data on a storage medium including recording data recorded on the microblock payload on the storage medium with reference to an offset recorded on the microblock header, the offset indicating an address of data of a file recorded on the microblock payload.

7. The method as claimed in claim 6, further comprising recording the at least one file received through the file blocks on the storage medium with reference to a file path recorded on the microblock header.

8. The method as claimed in claim 6, further comprising:

receiving (S1300) a transmission file list from the data transmitting apparatus; determining a file to resume download from among a plurality of files already received using the transmission file list; generating (S1230) a download resuming list comprising an index and an offset of the determined file, the offset indicating a start address of data of the file determined to resume download; and transmitting the download resuming list to the data transmitting apparatus, wherein the transmission file list is one of a plurality of transmission file lists which are generated by dividing all files to be transmitted to a communication unit by the data transmitting apparatus, and the transmission file list comprises information on indexes, file names, and whole file sizes of files included in the one transmission file list.

9. The method as claimed in claim 8, wherein the determining comprises, if a file corresponding to a file name included in the received transmission file list is a first file that is one of the plurality of files already received, and if a metafile of the first file exists, determining the first file to be the file to resume download, wherein the metafile comprises a flag which indicates information regarding whether transmission of the first file is completed or not.

10. The method as claimed in claim 9, wherein the generating the download resuming list comprises, if the first file is received through the plurality of file blocks and if a transmission amount of a first file block that transmits the first file for the first time from among the plurality of file blocks is recorded on the metafile as '0', generating a download resuming list in which the offset of the first file is '0', wherein the data transmitting apparatus re-transmits the first file from the beginning.

11. The method as claimed in claim 9, wherein the generating the download resuming list comprises, if the first file is received through the plurality of file blocks, a transmission amount of a first file block, i=1, that transmits the first file for the first time from among the plurality of file blocks is recorded on the metafile as 'k byte', k being a positive number, and a flag of a file block that transmits the first file for the ith time, i=2, 3, ...m, is '0', generating a download resuming list in which the offset of the first file is 'k byte + (i-2)*n byte',
wherein the n byte is a maximum transmission size of the file block, and the data transmitting apparatus re-transmits the data from a location corresponding to the offset of the first file.

12. The method as claimed in claim 9, further comprising generating a metafile of the first file received through the file blocks,
wherein the metafile comprises a maximum transmission size of the first file block, a received accumulative file size of the first file, a size of the first file block that transmits the first file for the first time from among the plurality of file blocks, and a flag indicating whether next file blocks are received or not after the first file is continuously transmitted.

**Patentansprüche**

1. Datenübertragungsvorrichtung (100; 500), die zur Übertragung eines Dateiblocks ausgebildet ist, wobei die Vorrichtung umfasst:

eine Diskettenleseeinheit (130; 540), die ausgebildet ist, die gesamte Datengröße einer ersten Datei aus mehreren zu übertragenden Dateien mit einer maximalen Mikroblock-Nutzdatengröße des Dateiblocks zu vergleichen, wobei:

wenn die gesamte Datengröße der ersten Datei gleich der maximalen Mikroblock-Nutzdatengröße des Dateiblocks ist, die Diskettenleseeinrichtung ferner ausgebildet ist, einen Mikroblock für den Dateiblock zu erzeugen (S1050) und die gesamten Daten der ersten Datei in einem Mikroblock-Nutzdatenbereich des erzeugten Mikroblocks aufzuzeichnen (S1055),
wenn die gesamte Dateigröße der ersten Datei größer als die maximale Mikroblock-Nutzdatengröße des Dateiblocks ist, die Diskettenleseeinrichtung ferner ausgebildet ist, einen Mikroblock für den Dateiblock zu erzeugen (S1080), Daten aus der ersten Datei, die der maximalen Mikroblock-Nutzdatengröße entsprechen, in einem Mikroblock-Nutzdatenbereich des erzeugten Mikroblocks aufzuzeichnen (S1085), und die restlichen Daten der ersten Datei in weiteren Dateiblöcken aufzuzeichnen; und
wenn die gesamte Datengröße der ersten Datei kleiner als die maximale Mikroblock-Nutzdatengröße des Dateiblocks ist, die Diskettenleseeinrichtung ferner ausgebildet ist, einen ersten Mikroblock für den Dateiblock zu erzeugen (S1015), die gesamten Daten der ersten Datei in einem Mikroblocknutzdatenbereich des erzeugten ersten Mikroblocks aufzuzeichnen (S1020), einen zweiten Mikroblock für den Dateiblock zu erzeugen und Daten aus einer zweiten Datei aus den mehreren zu übertragenden Dateien in einem Mikroblocknutzdatenbereich des erzeugten zweiten Mikroblocks aufzuzeichnen; und

eine Kommunikationseinheit (150; 560), die zur Übertragung des Dateiblocks zu einer Datenempfangsvorrichtung (200; 600) unter Nutzung eines parallelen Datenstroms ausgebildet ist, wobei der eine oder die mehreren erzeugten Mikroblöcke in dem Dateiblock enthalten sind, wobei jeder des einen oder der mehreren erzeugten Mikroblöcke in eine Mikroblockkopfzeile und einen Mikroblocknutzdatenbereich unterteilt ist, und
wobei die Diskettenleseeinrichtung ferner ausgebildet ist, einen Offset, der eine Adresse von Daten einer Datei, die in dem Mikroblock-Nutzdatenbereich aufgezeichnet sind, kennzeichnet, in der Mikroblockkopfzeile aufzuzeichnen und die Datei in dem Mikroblock-Nutzdatenbereich aufzuzeichnen.

2. Datenübertragungsvorrichtung nach Anspruch 1, wobei, wenn der gesamte Dateiblock mit den Daten der ersten Datei aus den mehreren zu übertragenden Dateien gefüllt ist, die Diskettenleseeinrichtung ferner ausgebildet ist, den Dateiblock in eine Mikroblockzeile und einen Mikroblock-Nutzdatenbereich zu unterteilen.

3. Datenübertragungsvorrichtung nach Anspruch 1, die ferner eine Listenverwaltungseinheit (520) aufweist, die ausgebildet ist, mehrere Übertragungsdateilisten aus den mehreren zu der Datenempfangsvorrichtung zu übertragenden Dateien zu erzeugen (S1215), und die mehreren Übertragungsdateilisten zu der Datenempfangsvorrichtung zu übertragen, wobei jede der mehreren Übertragungsdateilisten Information über Indizes, Dateinamen und Gesamtdateigrößen von Dateien, die in jeder Übertragungsdateiliste enthalten sind, umfasst.

4. Datenübertragungsvorrichtung nach Anspruch 3, wobei während der Übertragung der mehreren Übertragungsdateilisten der Reihe nach zu der Dateiempfangsvorrichtung die Kommunikationseinheit ferner ausgebildet ist, den Dateiblock, der den einen oder die mehreren Mikroblöcke umfasst, in denen alle Daten aufgezeichnet sind, unter Anwendung eines parallelen Datenstroms zu übertragen.

5. Datenübertragungsvorrichtung nach Anspruch 3, wobei die Diskettenleseeinrichtung ferner ausgebildet ist, eine Datei aus den mehreren Dateien zu ermitteln, die einem Index entspricht, der in einer Download-Fortsetzungsliste enthalten ist, die aus der Datenempfangsvorrichtung empfangen wird, und zum Übertragen zu beginnen, um einen Download fortzusetzen durch Aufzeichnen von Daten der ermittelten Datei aus einer Speicherstelle, die einem Offset entspricht, der in der Download-Fortsetzungsliste in dem Dateiblock enthalten ist,

wobei die Download-Fortsetzungsliste einen Index und einen Offset einer Datei enthält, die für eine Fortsetzung des Downloads bestimmt ist, wobei der Offset eine Startadresse von Daten der für die Fortsetzung des Downloads bestimmten Datei angibt.

6. Verfahren zum Empfangen von Daten, wobei das Verfahren umfasst:

Empfangen mehrerer Dateiblöcke, die mindestens eine Datei enthalten, über einen parallelen Datenstrom aus einer Datenübertragungsvorrichtung (100; 500), wobei jeder der mehreren Dateiblöcke einen oder mehrere Mikroblöcke enthält, wobei jeder Mikroblock eine Mikroblockkopfzeile und einen Mikroblock-Nutzdatenbereich enthält, wobei, wenn ein Dateiblock mehr als einen Mikroblock enthält, die Mikroblöcke des Dateiblocks entsprechend Daten aufweisen, die unterschiedlichen Dateien entsprechen; und

Auslesen (SS1130) von Daten aus jedem Mikroblock für jeden einzelnen Mikroblock und Aufzeichnen der Daten auf einem Speichermedium einschließlich von Aufzeichnungsdaten, die in dem Mikroblock-Nutzdatenbereich aufgezeichnet sind, auf dem Speichermedium mit Verweis auf einen Offset, der in der Mikroblockkopfzeile aufgezeichnet ist, wobei der Offset eine Adresse von Daten einer in dem Mikroblock-Nutzdatenbereich aufgezeichneten Datei angibt.

7. Verfahren nach Anspruch 6, das ferner umfasst: Aufzeichnen der mindestens einen Datei, die durch die Dateiblöcke empfangen wurde, auf dem Speichermedium mit Verweis auf einen Dateipfad, der in der Mikroblockkopfzeile aufgezeichnet ist.

8. Verfahren nach Anspruch 6, das ferner umfasst:

Empfangen (S1300) einer Übertragungsdateiliste aus der Datenübertragungsvorrichtung;

Ermitteln einer Datei, für die ein Download fortzusetzen ist, aus mehreren Dateien die bereits empfangen wurden, unter Anwendung der Übertragungsdateiliste;

Erzeugen (S1230) einer Download-Fortsetzungsliste mit einem Index und einem Offset der ermittelten Datei, wobei der Offset eine Startadresse von Daten der Datei angibt, die für eine Fortsetzung des Downloads ermittelt ist; und

Übertragen der Download-Fortsetzungsliste zu der Datenübertragungsvorrichtung, wobei die Übertragungsdateiliste eine aus mehreren Übertragungsdateilisten ist, die erzeugt werden, indem alle zu einer Kommunikationseinheit durch die Datenübertragungsvorrichtung zu übertragenden Dateien aufgeteilt werden, und die Übertragungsdateiliste Information über Indizes, Dateinamen und Gesamtdatengrößen von Dateien, die in der einen Übertragungsdateiliste enthalten sind, umfasst.

9. Verfahren nach Anspruch 8, wobei das Ermitteln umfasst: wenn eine Datei entsprechend einem Dateinamen, der in der empfangenen Übertragungsdateiliste enthalten ist, eine erste Datei ist, die eine der mehreren bereits empfangenen Dateien ist, und wenn eine Meta-Datei der ersten Datei existiert, Bestimmen der ersten Datei als die Datei, für die der Download fortzusetzen ist,

wobei die Meta-Datei eine Markierung enthält, die Information darüber angibt, ob eine Übertragung der ersten Datei abgeschlossen ist oder nicht.

10. Verfahren nach Anspruch 9, wobei das Erzeugen der Download-Fortsetzungsliste umfasst:

wenn die erste Datei über die mehreren Dateiblöcke empfangen wird und wenn ein Übertragungsbetrag eines ersten Dateiblocks aus den mehreren Dateiblöcken, der die erste Datei zum ersten Mal überträgt, in der Meta-Datei als "0" aufgezeichnet ist, Erzeugen einer Download-Fortsetzungsliste, in der der Offset der ersten Datei gleich "0" ist,

wobei die Datenübertragungsvorrichtung die erste Datei von Beginn an erneut überträgt.

11. Verfahren nach Anspruch 9, wobei das Erzeugen der Download-Fortsetzungsliste umfasst:

wenn die erste Datei über die mehreren Dateiblöcke empfangen wird, ein Übertragungsbetrag eines ersten Dateiblocks i=1, der die erste Datei aus den mehreren Dateiblöcken zum ersten Mal überträgt, in der Meta-Datei als "k Byte" mit k als positiver Zahl aufgezeichnet ist, und eine Markierung eines Dateiblocks, der die erste Datei zum i-ten Male mit i=2, 3, ...m überträgt, gleich "0" ist, Erzeugen einer Download-Fortsetzungsliste, in der der Offset der ersten Datei gleich "k Byte + (i-2)*n Byte" ist,

wobei die n Byte eine maximale Übertragungsgröße des Dateiblocks sind und die Datenübertragungsvorrichtung die Daten aus einer Speicherstelle, die dem Offset der ersten Datei entspricht, erneut überträgt.

**12.** Verfahren nach Anspruch 9, das ferner Erzeugen einer Meta-Datei der über die Dateiblöcke empfangenen ersten Datei umfasst,

wobei die Meta-Datei eine maximale Übertragungsgröße des ersten Dateiblocks, eine empfangene kumulierte Dateigröße der ersten Datei, eine Größe des ersten Dateiblocks aus den mehreren Dateiblöcken, der die erste Datei das erste Mal überträgt, und eine Markierung enthält, die angibt, ob nächste Dateiblöcke empfangen werden oder nicht, nachdem die erste Datei zusammenhängend übertragen ist.

## Revendications

**1.** Dispositif de transmission de données (100 ; 500) adapté pour la transmission d'un bloc de fichier, le dispositif comprenant :

un lecteur de disque (130 ; 540) adapté pour la comparaison d'une taille d'un ensemble de données d'un premier fichier parmi une pluralité de fichiers à transmettre à une taille de charge utile maximale de microbloc du bloc de fichier, dans lequel :

si la taille d'un ensemble de données du premier fichier est égale à la taille de charge utile maximale de microbloc du bloc de fichier, le lecteur de disque est en outre adapté pour la génération (S1050) d'un microbloc pour le bloc de fichier et pour l'enregistrement (S1055) de l'ensemble de données du premier fichier dans une charge utile de microbloc du microbloc généré,

si la taille d'un ensemble de données du premier fichier est supérieure à la taille de charge utile maximale de microbloc du bloc de fichier, le lecteur de disque est en outre adapté pour la génération (S1080) d'un microbloc pour le bloc de fichier, pour l'enregistrement (S1085) de données issues du premier fichier correspondant à la taille de charge utile maximale de microbloc dans une charge utile de microbloc du microbloc généré, et pour l'enregistrement de données restantes du premier fichier sur des blocs de fichier ultérieurs ; et

si la taille d'un ensemble de données du premier fichier est inférieure à la taille de charge utile maximale de microbloc du bloc de fichier, le lecteur de disque est en outre adapté pour la génération (S1015) d'un premier microbloc pour le bloc de fichier, pour l'enregistrement (S1020) de l'ensemble de données du premier fichier dans une charge utile de microbloc du premier microbloc généré, pour la génération d'un deuxième microbloc pour le bloc de fichier et pour l'enregistrement de données issues d'un deuxième fichier parmi la pluralité de fichiers à transmettre dans une charge utile de microbloc du deuxième microbloc généré ; et

une unité de communication (150 ; 560) adaptée pour la transmission du bloc de fichier à un dispositif de réception de données (200 ; 600) au moyen d'un flux parallèle, dans lequel l'un ou plus microblocs générés sont inclus dans le bloc de fichier, dans lequel chacun de l'un ou plus microblocs générés sont divisés en un en-tête de microbloc et une charge utile de microbloc,

et dans lequel le lecteur de disque est en outre adapté pour l'enregistrement d'un décalage, qui indique une adresse de données d'un fichier enregistré dans la charge utile de microbloc, dans l'en-tête de microbloc, et pour l'enregistrement du fichier dans la charge utile de microbloc.

**2.** Le dispositif de transmission de données tel que revendiqué à la revendication 1, dans lequel, si le bloc de fichier entier est rempli avec les données du premier fichier issu de la pluralité de fichiers à transmettre, le lecteur de disque est en outre adapté pour la division du bloc de fichier en un en-tête de microbloc et une charge utile de microbloc.

**3.** Le dispositif de transmission de données tel que revendiqué à la revendication 1, comprenant en outre une unité de gestion de listes (520) adaptée à la génération (S1215) d'une pluralité de listes de fichiers de transmission à partir de la pluralité de fichiers à transmettre au dispositif de réception de données, et pour la transmission de la pluralité de listes de fichiers de transmission au dispositif de réception de données, dans lequel chacune de la pluralité de listes de fichiers de transmission comprend des informations sur des index, des noms de fichier, et des tailles d'ensemble de fichier de fichiers inclus dans chaque liste de fichiers de transmission.

4. Le dispositif de transmission de données tel que revendiqué à la revendication 3, dans lequel, tandis que la pluralité de listes de fichiers de transmission sont transmises au dispositif de réception de données en séquence, l'unité de communication est en outre adaptée pour la transmission du bloc de fichier comprenant l'un ou plusieurs microblocs dans lesquels toutes les données sont enregistrées au moyen d'un flux parallèle.

5. L'appareil de transmission de données tel que revendiqué à la revendication 3, dans lequel le lecteur de disque est en outre adapté pour l'identification d'un fichier correspondant à un index inclus dans une liste de reprise de téléchargement reçue du dispositif de réception de données issu de la pluralité de fichiers, et pour le démarrage d'une transmission de reprise de téléchargement en enregistrant des données du fichier identifié à partir d'un emplacement correspondant à un décalage inclus dans la liste de reprise de téléchargement sur le bloc de fichier,
dans lequel la liste de reprise de téléchargement comprend un index et un décalage d'un fichier déterminé pour une reprise de téléchargement, le décalage indiquant une adresse de départ de données du fichier déterminé pour une reprise de téléchargement.

6. Procédé de réception de données, le procédé comprenant :

la réception d'une pluralité de blocs de fichier véhiculant au moins un fichier sur un flux parallèle depuis un dispositif de transmission de données (100; 500), dans lequel chacun de la pluralité de blocs de fichier comprend un ou plusieurs microblocs, chaque microbloc comprenant un en-tête de microbloc et une charge utile de microbloc, dans lequel si un bloc de fichier comprend plus d'un microbloc, les microblocs du bloc de fichier comprennent respectivement des données correspondant à différents fichiers ; et
la lecture (SS1130) de données issues de chaque microbloc un à un et l'enregistrement des données sur un support de stockage incluant l'enregistrement de données enregistrées dans la charge utile de microbloc sur le support de stockage avec référence à un décalage enregistré dans l'en-tête de microbloc, le décalage indiquant une adresse de données d'un fichier enregistré dans la charge utile de microbloc.

7. Le procédé tel que revendiqué à la revendication 6, comprenant en outre l'enregistrement de l'au moins un fichier reçu via les blocs de fichier sur le support de stockage avec référence à un chemin de fichier enregistré dans l'en-tête de microbloc.

8. Le procédé tel que revendiqué à la revendication 6, comprenant en outre :

la réception (S1300) d'une liste de fichiers de transmission provenant du dispositif de transmission de données ;
la détermination d'un fichier pour une reprise de téléchargement parmi une pluralité de fichiers déjà reçus au moyen d'une liste de fichiers de transmission ;
la génération (S1230) d'une liste de reprise de téléchargement comprenant un index et un décalage du fichier déterminé, le décalage indiquant une adresse de départ de données du fichier déterminé pour une reprise de téléchargement ; et
la transmission de la liste de reprise de téléchargement au dispositif de transmission de données,
dans lequel la liste de fichiers de transmission est une d'une pluralité de listes de fichiers de transmission qui sont générées par la division de tous les fichiers à transmettre à une unité de communication par l'appareil de transmission de données, et la liste de fichiers de transmission comprend des information sur des index, des noms de fichiers, et des tailles d'ensemble de fichier de fichiers inclus dans l'une liste de fichiers de transmission.

9. Le procédé tel que revendiqué à la revendication 8, dans lequel la détermination comprend, si un fichier correspondant à un nom de fichier inclus dans la liste de fichiers de transmission reçue est un premier fichier qui est un de la pluralité de fichiers déjà reçus, et si un métafichier du premier fichier existe, la détermination du premier fichier en tant que fichier dont le téléchargement est à reprendre,
dans lequel le métafichier comprend un indicateur qui indique des informations relatives à l'achèvement ou non de la transmission du premier fichier.

10. Le procédé tel que revendiqué à la revendication 9, dans lequel la génération de la liste de reprise de téléchargement comprend, si le premier fichier est reçu via la pluralité de blocs de fichier et si une quantité de transmission d'un premier bloc de fichier qui transmet le premier fichier pour la première fois à partir de la pluralité de blocs de fichier est enregistré dans le métafichier en tant que '0', la génération d'une liste de reprise de téléchargement dans laquelle le décalage du premier fichier est '0',

dans lequel le dispositif de transmission de données re-transmet le premier fichier depuis le début.

11. Le procédé tel que revendiqué à la revendication 9, dans lequel la génération de la liste de reprise de téléchargement comprend, si le premier fichier est reçu via la pluralité de blocs de fichier, une quantité de transmission d'un premier bloc de fichier, i=1, qui transmet le premier fichier pour la première fois à partir de la pluralité de blocs de fichier est enregistré dans le métafichier en tant que 'octet k', k étant un nombre positif, et un indicateur d'un bloc de fichier qui transmet le premier fichier pour la i-ème fois, i=2, 3, ...m, est '0', la génération d'une liste de reprise de téléchargement dans laquelle le décalage du premier fichier est 'octet k + (i-2)*octet n',

dans lequel l'octet n est une taille de transmission maximale du bloc de fichier, et l'appareil de transmission de données re-transmet les données à partir d'un emplacement correspondant au décalage du premier fichier.

12. Le procédé tel que revendiqué à la revendication 9, comprenant en outre la génération d'un métafichier du premier fichier reçu via les blocs de fichier,

dans lequel le métafichier comprend une taille de transmission maximale du premier bloc de fichier, une taille de fichier cumulative reçue du premier fichier, une taille du premier bloc de fichier qui transmet le premier fichier pour la première fois à partir de la pluralité de blocs de fichier, et un indicateur indiquant si les prochains blocs de fichier sont ou non reçus après la transmission continue du premier fichier.

Fig. 1

10

20

S1

S2

S3

SN

DATA
TRANSMITTING
APPARATUS

DATA
RECEIVING
APPARATUS

PARALLEL
TRANSMISSION
STREAM

EP 2 587 769 B1

Fig. 2

100

**FIRST DATA TRANSMITTING APPARATUS**

| FIRST STORAGE MEDIUM | FIRST DISK READER | FIRST INACTIVE BLOCK POOL |
|---|---|---|
| 110 | 130 | 120 |

| FIRST CONTROLLER | FIRST ACTIVE BLOCK POOL | FIRST COMMUNICATION UNIT |
|---|---|---|
| | | FIRST SOCKET WRITERS |
| 160 | 140 | 150 |
| | | 151 |

FILE BLOCK
(PARALLEL TCP CHANNEL)

200

**FIRST DATA RECEIVING APPARATUS**

| SECOND INACTIVE BLOCK POOL | FIRST DISK WRITER | SECOND STORAGE MEDIUM |
|---|---|---|
| 220 | 240 | 250 |

| SECOND COMMUNICATION UNIT | SECOND ACTIVE BLOCK POOL | SECOND CONTROLLER |
|---|---|---|
| FIRST SOCKET READER | | |
| 210 | 230 | 260 |
| 211 | | |

21

Fig. 3

| FH | FP |
|----|----|

←FILE BLOCK→←——— FILE BLOCK ———→
HEADER                  PAYLOAD

< FILE BLOCK >

Fig. 4A

FILE BLOCK
←— HEADER —→←——————— FILE BLOCK PAYLOAD ———————→

| FH | MH | MP |
|----|----|----|

| MH size | offset | length | File size | File path |
|---------|--------|--------|-----------|-----------|

←———— MICROBLOCK HEADER ————→

< FILE BLOCK >

Fig. 4B

| FH | MH1 | MP1 | MH2 | MP2 | MH3 | MP3 |
|----|-----|-----|-----|-----|-----|-----|

←——— FIRST ———→←——— SECOND ———→←——— THIRD ———→
MICROBLOCK      MICROBLOCK      MICROBLOCK
( MB1 )         ( MB2 )         ( MB3 )

←— FILE BLOCK —→←——————— FILE BLOCK ———————→
HEADER                PAYLOAD ( FP )
( FH )

←——————— FILE BLOCK ———————→

< FILE BLOCK >

Fig. 5

EP 2 587 769 B1

23

**SECOND DATA RECEIVING APPARATUS** 600

| | | |
|---|---|---|
| FOURTH CONTROLLER 670 | FOURTH ACTIVE BLOCK POOL 640 | LIST IDENTIFICATION UNIT 620 |
| FOURTH STORAGE MEDIUM 660 | SECOND DISK WRITER 650 | FOURTH INACTIVE BLOCK POOL 630 |

FOURTH COMMUNICATION UNIT 611

SECOND SOCKET READER 610

DOWNLOAD RESUMING LIST

TRANSMISSION FILE LIST

(PARALLEL TCP CHANNEL)

FILE BLOCK

**SECOND DATA TRANSMITTING APPARATUS** 500

SECOND SOCKET WRITERS 560

561

THIRD COMMUNICATION UNIT

| | | |
|---|---|---|
| LIST MANAGEMENT UNIT 520 | THIRD ACTIVE BLOCK POOL 550 | THIRD CONTROLLER 570 |
| THIRD INACTIVE BLOCK POOL 530 | SECOND DISK READER 540 | THIRD STORAGE MEDIUM 510 |

EP 2 587 769 B1

Fig. 6

| | FIRST INDEX | FIRST FILE NAME | FIRST FILE SIZE | SECOND INDEX | SECOND FILE NAME | SECOND FILE SIZE | ... | nth INDEX | nth FILE NAME | nth FILE SIZE | END IDENTIFIER |
|---|---|---|---|---|---|---|---|---|---|---|---|
| FORMAT : | | | | | | | | | | | |
| EXAMPLE : | 0 | a | 10 | 1 | so.txt | 3000 | ... | n-1th INDEX | b.jpg | 1000 | : |

FIRST FILE ←——— (FIRST INDEX, FIRST FILE NAME, FIRST FILE SIZE) ———→ SECOND FILE ←——— (SECOND INDEX, SECOND FILE NAME, SECOND FILE SIZE) ———→

< TRANSMISSION FILE LIST >

24

Fig. 7

FORMAT :

| MAXIMUM TRANSMISSION SIZE OF FB | RECEIVED ACCUMULATIVE FILE SIZE | 1ST MB SIZE | f2 | f3 | f4 | ... | fi |
|---|---|---|---|---|---|---|---|
| ←— 8 bytes —→ | ←— 8 bytes —→ | ←— 8 bytes —→ | ←1 byte→ | | | | |

EXAMPLE :

| | | | i=2 | i=3 | i=4 | | |
|---|---|---|---|---|---|---|---|
| 1Mbytes | 2.5 Mbytes | 0.5Mbytes | 1 | 0 | 1 | | |

ADDRESS TO RESUME DOWNLOAD : 0.5Mbytes + (3-2) × 1Mbytes = 1.5Mbytes

< METAFILE >

· $f_i$ = FLAG OF ith MB
· i = 2,3,4,...,m
· $f_i = \begin{cases} 0 \\ 1 \end{cases}$

Fig. 8

| FORMAT : | INDEX | OFFSET | INDEX | OFFSET | ... | END IDENTIFIER |
|---|---|---|---|---|---|---|
| EXAMPLE : | 0 | 1.5M | 3 | 1530 | : | |

FIRST FILE ———— FOURTH FILE ————

< DOWNLOAD RESUMING LIST >

Fig. 9

Fig. 10

```
                    ┌─────────┐
                    │  START  │
                    └────┬────┘
                         │
          ┌──────────────────────────┐
          │  REQUEST PACKAGE         │
          │  TRANSMISSION OF nth     │──── S1000
          │  FILE AND (n+1)th FILE   │
          └──────────────┬───────────┘
                         │
          ┌──────────────────────────┐
          │  COMPARE MAXIMUM MP      │──── S1005
          │  OF FB AND SIZE OF nth FILE │
          └──────────────┬───────────┘
```

|                          | S1010 | S1045 | S1075 |
|---|---|---|---|

MAXIMUM MP > nthFILE?    — S1010

MAXIMUM MP = nth FILE?    — S1045

MAXIMUM MP < nth FILE    — S1075

N

N

Y

GENERATE MBn CORRESPONDING TO SIZE OF nth FILE    — S1015

GENERATE MBn CORRESPONDING TO SIZE OF nth FILE    — S1050

GENERATE MBn CORRESPONDING TO MAXIMUM MP    — S1080

RECORD HEADER INFORMATION AND nth FILE ON MHn AND MPn    — S1020

RECORDING HEADER INFORMATION AND nth FILE ON MHn AND MPn    — S1055

RECORDING DATA OF nth FILE CORRESPONDING TO MAXIMUM MP ON MPn    — S1085

IS (n+1)th FILE RECORDED?    — S1025

IS (n+1)th FILE RECORDED?    — S1060

COMPARE MAXIMUM MP OF NEXT FB AND SIZE OF REMAINING DATA OF nth FILE    — S1090

N

N

Y

Y

COMPARE REMAINING MAXIMUM MP AND SIZE OF (n+1)th FILE    — S1030

n=n+1    — S1065

FB=NEXT FB, SIZE OF nth FILE=SIZE OF REMAINING DATA OF nth FILE    — S1095

n=n+1    — S1035

( S1005 )

( S1010 )

TRANSMIT FB IN WHICH PART OF FP IS EMPTY (RECORD nth FILE AND (n+1)thFILE)    — S1040

TRANSMIT FB IN WHICH FP IS FILLED (RECORD nth FILE AND (n+1)th FILE)    — S1070

( END )

Fig. 11

```
              ( START )
                  │
                  ▼
        ┌─────────────────────┐
        │   RECORD RECEIVED   │──S1110
        │     DATA ON FB      │
        └─────────────────────┘
                  │
                  ▼
        ┌─────────────────────┐
        │  PRESERVE FB IN     │──S1120
        │  ACTIVE BLOCKPOOL   │
        └─────────────────────┘
                  │
                  ▼
        ┌─────────────────────┐
        │ READ OUT DATA FROM  │
        │ FB ON MB BASIS AND  │──S1130
        │ RECORD DATA ON      │
        │ STORAGE MEDIUM      │
        └─────────────────────┘
                  │
                  ▼ S1140
              ╱───────╲          Y
        ╱ IS THERE REMAINING ╲───────
        ╲    MB IN FB?       ╱
              ╲───────╱
                  │
                  ▼ S1150
              ╱───────╲
     Y  ╱  IS THERE FB IN  ╲
     ───╲  ACTIVE BLOCK    ╱
         ╲    POOL?        ╱
              ╲───────╱
                  │ N
                  ▼ S1160
              ╱───────╲          N
        ╱   IS STORING     ╲──────
        ╲   COMPLETED?     ╱
              ╲───────╱
                  │ Y
                  ▼
        ┌─────────────────────┐
        │ TRANSMIT RECEPTION  │
        │ COMPLETION MESSAGE  │──S1170
        │ OF PACKAGE FILE     │
        └─────────────────────┘
                  │
                  ▼
               ( END )
```

Fig. 12

Fig. 13

```
                    ( START )
                        │
         ┌──────────────────────────────┐
         │ RECEIVE TRANSMISSION         │── S1300
         │ FILE LIST                    │
         └──────────────────────────────┘
                        │
                    ◇ S1310
      N   DOES FIRST FILE
    ┌─────EXIST IN 4th STORAGE
    │     MEDIUM?
    │          │ Y
    │       ◇ S1320
    │     IS FILE SIZE              Y
    │     EQUAL? AND NO ──────────────────┐
    │     METAFILE?                       │
    │          │ N                 ┌──────────────────┐
    │       ◇ S1340                │ TRANSMIT FIRST   │── S1330
    │  Y   TRANSMISSION            │ FILE             │
    │ ┌────AMOUNT OF FIRST FB      └──────────────────┘
    │ │    OF METAFILE =0?                 │
    │ │        │ N                         │
┌─────────────┐ ┌──────────────┐           │
│ OFFSET TO   │ │   i = 2      │── S1350   │
│ RESUME      │ └──────────────┘           │
│ DOWNLOAD=0  │        │                   │
└─────────────┘     ◇ S1360                │
   S1395          fi = 0 ?   N  ┌──────────┐ S1390
                ├──────────────→│ i = i + 1│
                    │ Y         └──────────┘
         ┌──────────────────────┐          │
         │ CALCULATE OFFSET TO  │── S1370   │
         │ RESUME DOWNLOAD      │           │
         └──────────────────────┘           │
                    │                       │
         ┌──────────────────────┐           │
         │ RECORD INDEX AND     │── S1380    │
         │ OFFSET OF FIRST FILE ON│          │
         │ DOWNLOAD RESUMING LIST │          │
         └──────────────────────┘           │
                    │                       │
                 ( END )←──────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6085251 A

- WO 2004088501 A1